# EUROPEAN PATENT SPECIFICATION

(11) **EP 3 317 153 B1**
(45) Date of publication and mention of the grant of the patent: **28.09.2022**
(21) Application number: 16818334.1
(22) Date of filing: 22.06.2016
(51) Int. Cl.: B60T 17/22, B60T 13/26, B60T 17/18, G01L 5/28

(54) **METHOD AND SYSTEM FOR IMPROVING SAFETY FOR A VEHICLE BRAKING ARRANGEMENT**
VERFAHREN UND SYSTEM ZUR VERBESSERUNG DER SICHERHEIT FÜR EINE FAHRZEUGBREMSANORDNUNG
PROCÉDÉ ET SYSTÈME PERMETTANT D'AMÉLIORER LA SÉCURITÉ POUR UN SYSTÈME DE FREINAGE DE VÉHICULE

(30) Priority: 02.07.2015 SE 1550936
(43) Date of publication of application: 09.05.2018
(73) Proprietor: Scania CV AB, 151 87 Södertälje (SE)
(72) Inventor: JEDDI TEHRANI, Hossein, 126 34 Hägersten (SE); SANDER, Lars-Göran, 141 73 Segeltorp (SE)
(74) Representative: Scania CV AB
(86) International application number: PCT/SE2016/050603
(87) International publication number: WO 2017/003349

(56) References cited:
- EP-A1- 1 717 122
- EP-A1- 2 532 561
- EP-A1- 2 532 561
- EP-A2- 0 642 962
- EP-A2- 0 642 962
- DE-A1- 3 434 884
- DE-A1- 4 206 172
- DE-A1- 10 238 670
- DE-A1- 19 954 584
- DE-A1-102007 025 835
- DE-B3-102007 053 766
- DE-B3-102011 011 395
- GB-A- 2 310 017
- US-A1- 2010 139 786
- US-A1- 2014 054 118
- US-B1- 6 276 761

## Description

### TECHNICAL FIELD

The invention relates to a method for improving safety for a vehicle braking arrangement. The invention also relates to a system for improving safety for a vehicle braking arrangement. The invention also relates to a vehicle. The invention in addition relates to a computer program and a computer program product.

### BACKGROUND ART

Vehicles, for example heavy vehicles such as trucks, are provided with an air processing system for a vehicle braking arrangement having air circuits for supplying compressed air for service brakes and parking brake.

It is regulated by law that the pressure in the air circuits for supplying compressed air for front and rear service brakes reach a certain value before the air circuit for the parking brake is pressurised.

Opening and closing pressure for such circuits may change during the life time of a vehicle due to air leakage when the combustion engine and hence the compressor being operated by means of the combustion engine is turned off. Hereby the vehicle may not fulfil the legal demand. This may result in the vehicle having impaired brake function when the parking brake is deactivated, the air pressure in the air circuits supplying the front and/or rear service brakes not having reached the demanded pressure level.

Prior art documents DE102007053766B3, WO03008250A2, WO2013152817A1 and DE19704358 are directed to a similar problem, but have a different approach than the herein suggested solution.

### OBJECTS OF THE INVENTION

An object of the present invention is to provide a method for improving safety for a vehicle braking arrangement having air circuits for supplying compressed air for service brakes and parking brake.

Another object of the present invention is to provide a system for improving safety for a vehicle braking arrangement having air circuits for supplying compressed air for service brakes and parking brake.

### SUMMARY OF THE INVENTION

These and other objects, apparent from the following description, are achieved by a method, a system, a vehicle, a computer program and a computer program product as set out in the appended independent claims. Preferred embodiments of the method and the system are defined in appended dependent claims.

Specifically an object of the invention is achieved by a method for improving safety for a vehicle braking arrangement having air circuits for supplying compressed air for service brakes and parking brake. The method comprises the step of determining the compressed air pressure in the respective air circuits. The method further comprises the steps of: determining the order in which said air circuits are pressurised for the respective circuits during air pressure build;
and taking action if the parking brake air circuit is pressurised prior to any of the service brake air circuits.

Hereby safety is improved in that the risk of the vehicle driving with impaired service brake function is reduced. In particular the certain criteria can be a pre-set threshold value set to provide a pre-determined brake performance.

According to an embodiment of the method the step of determining the order in which said air circuits are pressurised for the respective circuits comprises determining pressure build up to a certain pressure value. According to an embodiment the step of determining the order in which said air circuits are pressurised for the respective circuits comprises determining pressure build up to a specified pressure value. Hereby even more specific information is obtained thus further improving safety.

According to an embodiment of the method said criteria comprises the pressure in at least one of the air circuits for service brakes has reached a certain pressure and/or the pressure in all circuits for service brakes has reached a certain pressure, in particular a pre-determined pressure value.

The step of taking action comprises the step of informing the operator of the vehicle of the service brakes not being sufficiently pressurised or being incorrectly pressurised. Hereby safety is improved in that the operator receives the information of the potential hazard and may take proper measures in order to avoid an accident.

The step of taking action comprises the step of preventing the vehicle from being driven. Hereby safety is further improved in that it will not be possible to drive the vehicle with impaired service brake function.

The step of preventing the vehicle from being driven comprises the step of preventing deactivation of the parking brake or activate the parking brake if not activated.

Specifically an object of the invention is achieved by a system for improving safety for a vehicle braking arrangement having air circuits for supplying compressed air for service brakes and parking brake. The system comprises means for determining the compressed air pressure in the respective air circuits. The system further comprises means for determining the order in which said air circuits are pressurised for the respective circuits during air pressure build up and means for determining the relation between the pressure in said air circuits; and means for taking action if the parking brake air circuit is pressurised prior to any of the service brake air circuits.

According to an embodiment of the system the means for determining the order in which said air circuits are pressurised for the respective circuits comprises means for determining pressure build up to a specified pressure value.

According to an embodiment of the system said criteria comprises the pressure in at least one of the air circuits for service brakes has reached a certain pressure and/or the pressure in all circuits for service brakes has reached a certain pressure.

The means for taking action comprises means for informing the operator of the vehicle of the service brakes not being sufficiently pressurised or being incorrectly pressurised.

The means for taking action comprises means for preventing the vehicle from being driven.

The means for preventing the vehicle from being driven comprises means for preventing deactivation of the parking brake and means for activating the parking brake if not activated. The system according to the invention has the advantages according to the corresponding method claims.

Specifically an object of the invention is achieved by a vehicle comprising a system according to the invention.

Specifically an object of the invention is achieved by a computer program for improving safety for a vehicle braking arrangement, said computer program comprising program code which, when run on an electronic control unit or another computer connected to the electronic control unit, causes the electronic control unit to perform the method according to the invention.

Specifically an object of the invention is achieved by a computer program product comprising a digital storage medium storing the computer program according to the invention.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle according to the present invention;
Fig. 2 schematically illustrates an air processing system for a braking arrangement having air circuits for supplying compressed air for service brakes and parking brake;
Fig. 3 schematically illustrates the air pressure build up over time in the respective air circuits;
Fig. 4 schematically illustrates a system for improving safety for a vehicle braking arrangement according to an embodiment of the present invention;
Fig. 5 schematically illustrates a block diagram of a method for improving safety for a vehicle braking arrangement according to an embodiment of the present invention; and
Fig. 6 schematically illustrates a computer according to an embodiment of the present invention.

### DETAILED DESCRIPTION

Hereinafter the term "link" refers to a communication link which may be a physical connector, such as an optoelectronic communication wire, or a non-physical connector such as a wireless connection, for example a radio or microwave link.

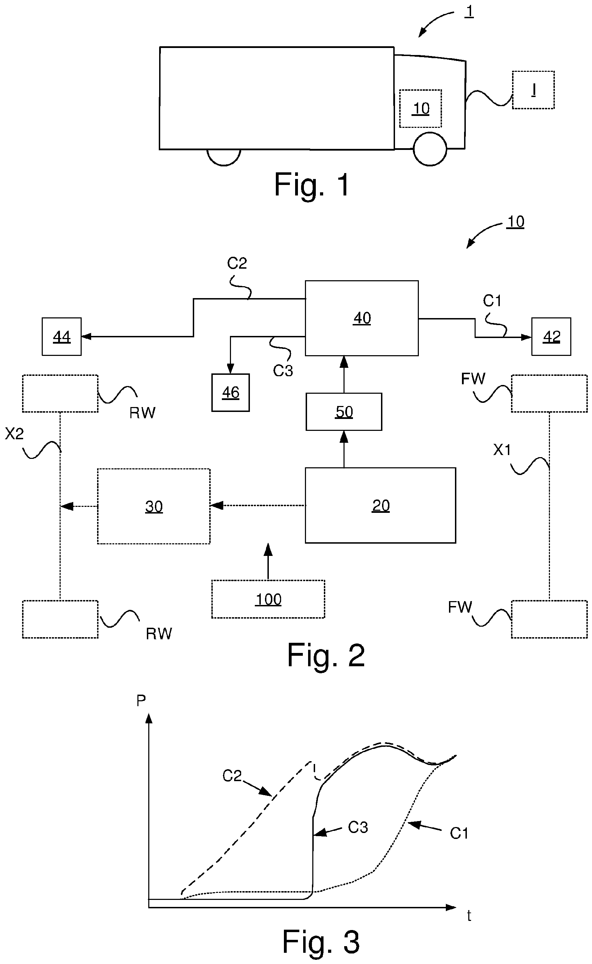

Fig. 1 schematically illustrates a side view of a vehicle 1 according to the present invention. The exemplified vehicle 1 is a heavy vehicle in the shape of a truck. The vehicle according to the present invention could be any vehicle such as a bus or a car. The vehicle comprises a system I for improving safety for a vehicle braking arrangement 10 having air circuits for supplying compressed air for service brakes and parking brake. The vehicle 1 comprises the vehicle braking arrangement 10.

Fig. 2 schematically illustrates an air processing system 40 for a braking arrangement 10 of a vehicle .

The vehicle is according to an embodiment the vehicle 1 illustrated in fig. 1. The vehicle could be any suitable vehicle. The vehicle comprises a powertrain. The powertrain comprises a combustion engine 20 for driving the vehicle. The vehicle has a front wheel axle X1 with front wheels FW and a drive wheel axle X2 with drive wheels RW. The vehicle may have any suitable number of wheel axles and thus wheels. The powertrain comprises a transmission unit 30 connected to a drive axle X2 of the vehicle. The combustion engine 20 is connected to the transmission unit 30.

The braking arrangement 10 has air circuits C1, C2, C3 for supplying compressed air for service brakes 42, 44 and parking brake 46.

According to an embodiment the braking arrangement 10 has a first air circuit C1 for supplying compressed air for front service brakes 42, a second air circuit C2 for supplying compressed air for rear service brakes 44, and a third air circuit C3 for supplying compressed air for a parking brake 46.

The combustion engine 20 is configured to operate a compressor 50 for providing compressed air for the air processing system 40. The air processing system 40 is configured to supply compressed air to the air circuits C1, C2, C3.

The braking arrangement is operably connected to an electronic control unit 100. The electronic control unit 100 is arranged to determine the order in which said air circuits are pressurised for the respective circuits during air pressure build up. The electronic control unit 100 is arranged to determine the relation between the pressure in said air circuits so as to determine whether certain criteria for relation between pressure in said circuits is fulfilled. Determining the relation comprises determining whether the pressure in at least one of the air circuits C1, C2 for service brakes 42, 44 has reached a certain pressure, this thus being a criterion. Determining the relation comprises determining whether the pressure in all circuits C1, C2 for service brakes 42, 44 has reached a certain pressure, this thus being a criterion.

If the parking brake air circuit is pressurised prior to any of the service brake air circuits action is taken so as to improve safety. If said certain criteria for relation between pressure in said circuits is fulfilled action is taken so as to improve safety. The action may comprise informing the operator of the vehicle of the service brakes not being sufficiently pressurized or incorrectly pressurised. The action may comprise preventing the vehicle from being driven by preventing deactivation of the parking brake or activation of the parking brake if the parking brake is not activated.

Fig. 3 schematically illustrates the air pressure build up P over time t in the respective air circuits C1, C2 and C3 according to fig. 2.

In this example the first air circuit for the front service brakes is pressurised after the third air circuit for the parking brake and thus driving the vehicle prior to the first air circuit being pressurised would be dangerous as the brake function of the front service brakes is impaired. By determining the order in which said air circuits C1, C2, C3 are pressurised for the respective circuits during air pressure build up, action may in this case be taken as the parking brake air circuit C3 is pressurised prior to the front service brake air circuit. The action may involve informing the operator of the vehicle of the front service brakes not being sufficiently pressurised and/or preventing the vehicle from being driven by preventing deactivation of the parking brake or activate the parking brake if it is not already activated.

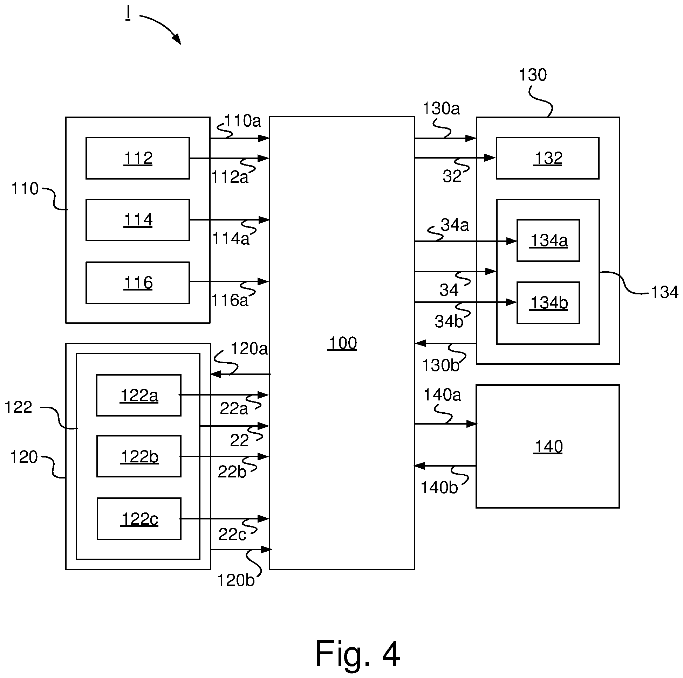

Fig. 4 schematically illustrates a system I for improving safety for a vehicle braking arrangement according to an embodiment of the present invention. The braking arrangement has air circuits for supplying compressed air for service brakes and parking brake. According to an embodiment the braking arrangement has a first air circuit for supplying compressed air for front service brakes, a second air circuit for supplying compressed air for rear service brakes, and a third air circuit for supplying compressed air for a parking brake. The air processing system and braking arrangement is according to an embodiment in accordance with the air processing system and braking arrangement in fig. 2. The braking arrangement is according to an embodiment supplied by means of an air processing system. The circuits is according to an embodiment comprised in an air processing system.

The system I comprises an electronic control unit 100.

The system I comprises means 110 for determining the compressed air pressure in the respective air circuits. The means 110 for determining the compressed air pressure in the respective air circuits comprises any suitable pressure sensor means.

The means 110 for determining the compressed air pressure in the respective air circuits comprises means 112 for determining the air pressure in the first air circuit for supplying compressed air for front service brakes. The means 112 for determining the air pressure in the first air circuit for supplying compressed air for front service brakes comprises at least one pressure sensor unit.

The means 110 for determining the compressed air pressure in the respective air circuits comprises means 114 for determining the air pressure in the second air circuit for supplying compressed air for rear service brakes. The means 114 for determining the air pressure in the second air circuit for supplying compressed air for rear service brakes comprises at least one pressure sensor unit.

The means 110 for determining the compressed air pressure in the respective air circuits comprises means 116 for determining the air pressure in the third air circuit for supplying compressed air for the parking brake. The means 116 for determining the air pressure in the third air circuit for supplying compressed air for the parking brake comprises at least one pressure sensor unit.

The system I comprises means 120 for determining the order in which said air circuits are pressurised for the respective circuits during air pressure build up. The means 120 for determining the order in which said air circuits are pressurised for the respective circuits during air pressure build up is according to an embodiment comprised in or comprises the electronic control unit 100.

The means 120 for determining the order in which said air circuits are pressurised for the respective circuits comprises means 122 for determining pressure build up to a specified pressure value. The means 122 for determining pressure build up to a specified pressure value comprises any suitable pressure sensor means

The means 122 for determining pressure build up to a specified pressure value comprises means 122a for determining pressure build up in the first air circuit to a specified pressure value. The means 122a for determining pressure build up in the first air circuit to a specified pressure value comprises at least one pressure sensor unit. The means 122a is according to an embodiment comprised in or comprises the means 112 for determining the air pressure in the first air circuit.

The means 122 for determining pressure build up to a specified pressure value comprises means 122b for determining pressure build up in the second air circuit to a specified pressure value. The means 122b for determining pressure build up in the second air circuit to a specified pressure value comprises at least one pressure sensor unit. The means 122b is according to an embodiment comprised in or comprises the means 114 for determining the air pressure in the second air circuit.

The means 122 for determining pressure build up to a specified pressure value comprises means 122c for determining pressure build up in the third air circuit to a specified pressure value. The means 122c for determining pressure build up in the third air circuit to a specified pressure value comprises at least one pressure sensor unit. The means 122c is according to an embodiment comprised in or comprises the means 116 for determining the air pressure in the third air circuit.

The system I comprises means 140 for determining if the relation between the pressure in said air circuits does not fulfil certain criteria.

Said certain criteria comprises that the pressure in at least one of the air circuits for service brakes has reached a certain pressure. The means 140 for determining if the relation between the pressure in said air circuits does not fulfil certain criteria is thus arranged to determine whether at least one of the air circuits for service brakes has reached a certain pressure.

Said certain criteria comprises that the pressure in all circuits for service brakes has reached a certain pressure. The means 140 for determining if the relation between the pressure in said air circuits does not fulfil certain criteria is thus arranged to determine whether the pressure in all circuits for service brakes has reached a certain pressure. This certain pressure in all circuits for service brakes may be lower than the certain pressure in at least one of the circuits for service brakes. The criteria for this certain pressure in all circuits for service brakes is according to an embodiment in the range of 7-8 bars, for example about 7,5 bars. The criteria for this certain pressure in all circuits for service brakes is according to an example about 4 bars.

The system I comprises means 130 for taking action if the parking brake air circuit is pressurised prior to any of the service brake air circuits and/or if the relation between the pressure in said air circuits does not fulfil certain criteria.

The means 130 for taking action comprises means 132 for informing the operator of the vehicle of the service brakes not being sufficiently pressurised or being incorrectly pressurised. The means 132 for informing the operator of the vehicle of the service brakes not being sufficiently pressurised or being incorrectly pressurised comprises visual means and/or acoustic means and/or tactile means.

The visual means comprises according to an embodiment a display unit for displaying information for the operator of the vehicle of the service brakes not being sufficiently pressurised or being incorrectly pressurised. The visual means comprises according to an embodiment a flashing or non-flashing light indicating that the service brakes are not sufficiently pressurised or being incorrectly pressurised.

The acoustic means comprises according to an embodiment a voice message informing the operator of the vehicle of the service brakes not being sufficiently pressurised or being incorrectly pressurised. The acoustic means comprises according to an embodiment a sound alarm indicating for the operator indicating that the service brakes are not sufficiently pressurised or being incorrectly pressurised.

The tactile means comprises according to an embodiment vibrations in the steering wheel, driver seat, pedals, gear shift lever or the like for informing the operator that the service brakes are not sufficiently pressurised or being incorrectly pressurised.

The means 130 for taking action comprises means 134 for preventing the vehicle from being driven.

The means 134 for preventing the vehicle from being driven comprises means 134a for preventing deactivation of the parking brake.

The means 134 for preventing the vehicle from being driven comprises means 134b for activating the parking brake if the parking brake is not activated.

The electronic control unit 100 is operably connected to the means 110 for determining the compressed air pressure in the respective air circuits via a link 110a. The electronic control unit 100 is via the link 110a arranged to receive a signal from said means 110 representing data for determining the compressed air pressure in the respective air circuits.

The electronic control unit 100 is operably connected to the means 112 for determining the air pressure in the first air circuit for supplying compressed air for front service brakes via a link 112a. The electronic control unit 100 is via the link 112a arranged to receive a signal from said means 112 representing data for determining the compressed air pressure in the in the first air circuit.

The electronic control unit 100 is operably connected to the means 114 for determining the air pressure in the second air circuit for supplying compressed air for rear service brakes via a link 114a. The electronic control unit 100 is via the link 114a arranged to receive a signal from said means 114 representing data for determining the compressed air pressure in the in the second air circuit.

The electronic control unit 100 is operably connected to the means 116 for determining the air pressure in the third air circuit for supplying compressed air for the parking brake via a link 116a. The electronic control unit 100 is via the link 116a arranged to receive a signal from said means 116 representing data for determining the compressed air pressure in the in the third air circuit.

The electronic control unit 100 is operably connected to the means 120 for determining the order in which said air circuits are pressurised for the respective circuits during air pressure build up via a link 120a. The electronic control unit 100 is via the link 120a arranged to send a signal to said means 120 representing data for pressurisation in the air circuits.

The electronic control unit 100 is operably connected to the means 120 for determining the order in which said air circuits are pressurised for the respective circuits during air pressure build up via a link 120b. The electronic control unit 100 is via the link 120b arranged to receive a signal from said means 120 representing data for the order in which said air circuits are pressurised.

The electronic control unit 100 is operably connected to the means 122 for determining pressure build up to a specified pressure value in the respective air circuits via a link 22. The electronic control unit 100 is via the link 22 arranged to receive a signal from said means 122 representing data for pressure build up to a specified pressure value in the respective air circuits.

The electronic control unit 100 is operably connected to the means 122a for determining pressure build up in the first air circuit to a specified pressure value via a link 22a. The electronic control unit 100 is via the link 22a arranged to receive a signal from said means 122a representing data for pressure build up to a specified pressure in the first air circuit.

The electronic control unit 100 is operably connected to the means 122b for determining pressure build up in the second air circuit to a specified pressure value via a link 22b. The electronic control unit 100 is via the link 22b arranged to receive a signal from said means 122b representing data for pressure build up to a specified pressure value in the second air circuit.

The electronic control unit 100 is operably connected to the means 122c for determining pressure build up in the third air circuit to a specified pressure value via a link 22c. The electronic control unit 100 is via the link 22c arranged to receive a signal from said means 122c representing data for pressure build up to a specified pressure value in the third air circuit.

The electronic control unit 100 is operably connected to the means 140 for determining if the relation between the pressure in said air circuits does not fulfil certain criteria via a link 140a. The electronic control unit 100 is via the link 140a arranged to send a signal to said means 140a representing data for pressure in said air circuits.

The electronic control unit 100 is operably connected to the means 140 for determining if the relation between the pressure in said air circuits does not fulfil certain criteria via a link 140b. The electronic control unit 100 is via the link 140b arranged to receive a signal from said means 140b representing data for relation between the pressure in said air circuits.

The electronic control unit 100 is operably connected to the means 130 for taking action if the parking brake air circuit is pressurised prior to any of the service brake air circuits and/or if the relation between the pressure in said air circuits does not fulfil certain criteria via a link 130a. The electronic control unit 100 is via the link 130a arranged to send a signal to said means 130 representing data for order in which said air circuits are pressurised for the respective circuits and/or data for the relation between the pressure in said air circuits.

The electronic control unit 100 is operably connected to the means 130 for taking action if the parking brake air circuit is pressurised prior to any of the service brake air circuits and/or if the relation between the pressure in said air circuits does not fulfil certain criteria via a link 130b. The electronic control unit 100 is via the link 130b arranged to receive a signal from said means 130 representing data for taking action due to wrong order in which said air circuits are pressurised for the respective circuits and/or due to the relation between the pressure in said air circuits not fulfilling certain criteria.

The electronic control unit 100 is operably connected to the means 132 for informing the operator of the vehicle of the service brakes not being sufficiently pressurised or being incorrectly pressurised via a link 32. The electronic control unit 100 is via the link 32 arranged to send a signal to said means 130a representing data for information of the service brakes not being sufficiently pressurised or being incorrectly pressurised.

The electronic control unit 100 is operably connected to the means 134 for preventing the vehicle from being driven via a link 34. The electronic control unit 100 is via the link 34 arranged to send a signal to said means 134 representing data for preventing the vehicle from being driven.

The electronic control unit 100 is operably connected to the means 134a for preventing deactivation of the parking brake via a link 34a. The electronic control unit 100 is via the link 34a arranged to send a signal to said means 134a representing data for preventing deactivation of the parking brake.

The electronic control unit 100 is operably connected to the means 134b for activating the parking brake if the parking brake is not activated via a link 34b. The electronic control unit 100 is via the link 34b arranged to send a signal to said means 134b representing data for activating the parking brake.

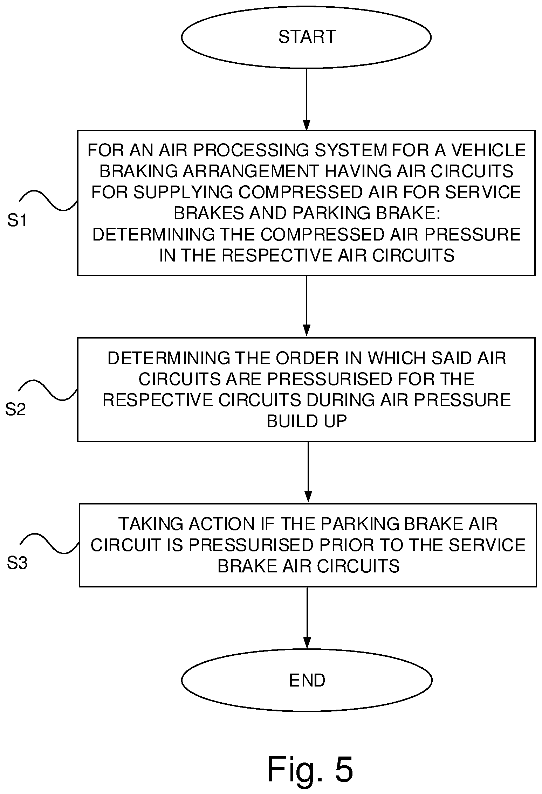

Fig. 5 schematically illustrates a block diagram of a method for improving safety for a vehicle braking arrangement having air circuits for supplying compressed air for service brakes and parking brake.

According to the embodiment the method for improving safety for a vehicle braking arrangement comprises a step S1. In this step compressed air pressure in the respective air circuits is determined.

According to the embodiment the method for improving safety for a vehicle braking arrangement comprises a step S2. In this step the order in which said air circuits are pressurised for the respective circuits during air pressure build up and/or the relation between the pressure in said air circuits is determined.

According to the embodiment the method for improving safety for a vehicle braking arrangement comprises a step S3. In this step action is taken if the parking brake air circuit is pressurised prior to any of the service brake air circuits and/or if the relation between the pressure in said air circuits does not fulfil certain criteria.

According to an embodiment of the method the step S2 of determining the order in which said air circuits are pressurised for the respective circuits comprises determining pressure build up to a specified pressure value.

According to an embodiment of the method the step S2 of determining the relation between the pressure in said air circuits comprises the step of determining that the pressure in at least one of the air circuits for service brakes has reached a certain pressure and/or the pressure in all circuits for service brakes has reached a certain pressure.

According to an embodiment of the method the step S3 of taking action comprises the step of informing the operator of the vehicle of the service brakes not being sufficiently pressurised.

According to an embodiment of the method the step S3 of taking action comprises the step of preventing the vehicle from being driven.

According to an embodiment of the method the step of preventing the vehicle from being driven comprises the step of preventing deactivation of the parking brake or activate the parking brake if not activated.

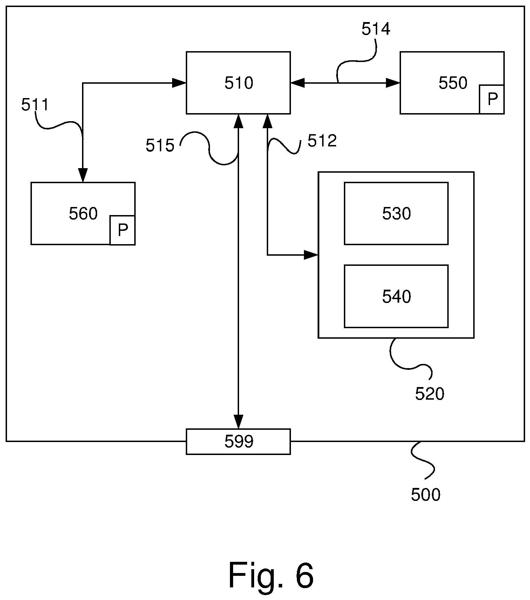

With reference to figure 6, a diagram of an apparatus 500 is shown. The control unit 100 described with reference to fig. 3 may according to an embodiment comprise apparatus 500. Apparatus 500 comprises a non-volatile memory 520, a data processing device 510 and a read/write memory 550. Non-volatile memory 520 has a first memory portion 530 wherein a computer program, such as an operating system, is stored for controlling the function of apparatus 500. Further, apparatus 500 comprises a bus controller, a serial communication port, I/O-means, an A/D-converter, a time date entry and transmission unit, an event counter and an interrupt controller (not shown). Non-volatile memory 520 also has a second memory portion 540.

A computer program P is provided comprising routines for improving safety for a vehicle braking arrangement having air circuits for supplying compressed air for service brakes and parking brake. The program P comprises routines for determining the compressed air pressure in the respective air circuits. The program P comprises routines for determining the order in which said air circuits are pressurised for the respective circuits during air pressure build up. The program P comprises routines for determining the relation between the pressure in said air circuits. The program P comprises routines for taking action if the parking brake air circuit is pressurised prior to any of the service brake air circuits and/or if the relation between the pressure in said air circuits does not fulfil certain criteria. The computer program P may be stored in an executable manner or in a compressed condition in a separate memory 560 and/or in read/write memory 550.

When it is stated that data processing device 510 performs a certain function it should be understood that data processing device 510 performs a certain part of the program which is stored in separate memory 560, or a certain part of the program which is stored in read/write memory 550.

Data processing device 510 may communicate with a data communications port 599 by means of a data bus 515. Non-volatile memory 520 is adapted for communication with data processing device 510 via a data bus 512. Separate memory 560 is adapted for communication with data processing device 510 via a data bus 511. Read/write memory 550 is adapted for communication with data processing device 510 via a data bus 514. To the data communications port 599 e.g. the links connected to the control unit 100 may be connected.

When data is received on data port 599 it is temporarily stored in second memory portion 540. When the received input data has been temporarily stored, data processing device 510 is set up to perform execution of code in a manner described above. The signals received on data port 599 can be used by apparatus 500 for determining the compressed air pressure in the respective air circuits. The signals received on data port 599 can be used by apparatus 500 for determining the order in which said air circuits are pressurised for the respective circuits during air pressure build up. The signals received on data port 599 can be used by apparatus 500 for determining the relation between the pressure in said air circuits. The signals received on data port 599 can be used by apparatus 500 for taking action if the parking brake air circuit is pressurised prior to any of the service brake air circuits and/or if the relation between the pressure in said air circuits does not fulfil certain criteria.

Parts of the methods described herein can be performed by apparatus 500 by means of data processing device 510 running the program stored in separate memory 560 or read/write memory 550. When apparatus 500 runs the program, parts of the methods described herein are executed.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplate

## Claims

1. A method for improving safety for a vehicle (1) braking arrangement (10) having air circuits (C1, C2, C3) for supplying compressed air for service brakes (42, 44) and parking brake (46), comprising the step of determining (S1) the compressed air pressure in the respective air circuits (C1, C2, C3), **characterized by** the steps of:
- determining (S2) the order in which said air circuits (C1, C2, C3) are pressurised for the respective circuits (C1, C2, C3) during air pressure build up; and
- taking action (S3) to improve safety if the parking brake air circuit (C3) is pressurised prior to any of the service brake air circuits (C1, C2);
wherein the step of taking action comprises the step of informing the operator of the vehicle of the service brakes (42, 44) not being sufficiently pressurised or being incorrectly pressurised, and
preventing the vehicle from being driven by activating the parking brake (46) if not activated.

2. A method according to claim 1, wherein the step of determining the order in which said air circuits (C1, C2, C3) are pressurised for the respective circuits (C1, C2, C3) comprises determining pressure build up to a certain pressure value.

3. A method according to claim 1 or 2, further comprising determining the relation between the pressure in said air circuits (C1, C2, C3) and taking action if the relation between the pressure in said air circuits (C1, C2, C3) does not fulfil certain criteria wherein said criteria comprises the pressure in at least one of the air circuits (C1, C2) for service brakes (42, 44) has reached a certain pressure and/or the pressure in all circuits (C1, C2) for service brakes (42, 44) has reached a certain pressure.

4. A system (I) for improving safety for a vehicle (1) braking arrangement (10) having air circuits (C1, C2, C3) for supplying compressed air for service brakes (42, 44) and parking brake (46), comprising means (110) for determining the compressed air pressure in the respective air circuits (C1, C2, C3), **characterized by** means (120) for determining the order in which said air circuits (C1, C2, C3) are pressurised for the respective circuits (C1, C2, C3) during air pressure build up; and means (130) for taking action to improve safety if the parking brake air circuit (C3) is pressurised prior to any of the service brake air circuits (C1, C2);
wherein the means (130) for taking action comprises means (132) for informing the operator of the vehicle (1) of the service brakes (46) not being sufficiently pressurised or being incorrectly pressurised, and
means (134) for preventing the vehicle (1) from being driven comprising means (134b) for activating the parking brake (46) if not activated.

5. A system according to claim 4, wherein the means (120) for determining the order in which said air circuits (C1, C2, C3) are pressurised for the respective circuits (C1, C2, C3) comprises means (122) for determining pressure build up to a specified pressure value.

6. A system according to claim 4 or 5, further comprising means (140) for determining the relation between the pressure in said air circuits (C1, C2, C3) and taking action if the relation between the pressure in said air circuits (C1, C2, C3) does not fulfil certain criteria, wherein said criteria comprises the pressure in at least one of the air circuits (C1, C2) for service brakes (42, 44) has reached a certain pressure and/or the pressure in all circuits (C1, C2) for service brakes (42, 44) has reached a certain pressure.

7. A vehicle (1) comprising a system (I) according to any of claims 4-6.

8. A computer program (P) for improving safety for a vehicle braking arrangement, said computer program (P) comprising program code which, when run on an electronic control unit (100) or another computer (500) connected to the electronic control unit (100), causes the electronic control unit to perform the steps according to claim 1-3.

9. A computer program product comprising a digital storage medium storing the computer program according to claim 8.

## Patentansprüche

1. Verfahren zur Verbesserung der Sicherheit einer Bremsanordnung (10) eines Fahrzeugs (1), die Druckluftkreise (C1, C2, C3) zur Zuführung von Druckluft für Betriebsbremsen (42, 44) und eine Feststellbremse (46) aufweist, umfassend den Schritt des Ermittelns (S1) des Drucks der Druckluft in den zugehörigen Druckluftkreisen (C1, C2, C3), **gekennzeichnet durch** die Schritte:
- Feststellen (S2) der Reihenfolge, in der die Druckluftkreise (C1, C2, C3) für die zugehörigen Kreise (C1, C2, C3) während eines Druckluftaufbaus unter Druck gesetzt werden, und
- Ergreifen einer Maßnahme (S3) zur Verbesserung der Sicherheit, falls der Feststellbremsendruckluftkreis (C3) vor einem der Betriebsbremsendruckluftkreise (C1, C2) unter Druck gesetzt wird,
wobei der Schritt des Ergreifens einer Maßnahme den Schritt des Informierens des Bedieners des Fahrzeugs umfasst, dass die Betriebsbremsen (42, 44) nicht ausreichend unter Druck gesetzt sind oder fehlerhaft unter Druck gesetzt sind, und Verhindern, dass das Fahrzeug gefahren wird, durch Aktivieren der Feststellbremse (46), falls sie nicht aktiviert ist.

2. Verfahren nach Anspruch 1, bei dem der Schritt des Feststellens der Reihenfolge, in der die Druckluftkreise (C1, C2, C3) für die zugehörigen Kreise (C1, C2, C3) unter Druck gesetzt werden, ein Ermitteln eines Druckaufbaus bis zu einem bestimmten Druckwert umfasst.

3. Verfahren nach Anspruch 1 oder 2, ferner umfassend ein Ermitteln des Verhältnisses zwischen dem Druck in den Druckluftkreisen (C1, C2, C3) und Ergreifen einer Maßnahme, falls das Verhältnis zwischen dem Druck in den Druckluftkreisen (C1, C2, C3) bestimmte Kriterien nicht erfüllt, wobei diese Kriterien umfassen, dass der Druck in wenigstens einem der Druckluftkreise (C1, C2) für Betriebsbremsen (42, 44) einen bestimmten Druck erreicht hat und/oder der Druck in allen Kreisen (C1, C2) für Betriebsbremsen (42, 44) einen bestimmten Druck erreicht hat.

4. System (I) zur Verbesserung der Sicherheit einer Bremsanordnung (10) eines Fahrzeugs (1), die Druckluftkreise (C1, C2, C3) zur Zuführung von Druckluft für Betriebsbremsen (42, 44) und eine Feststellbremse (46) aufweist, umfassend eine Einrichtung (110) zum Ermitteln des Drucks der Druckluft in den zugehörigen Druckluftkreisen (C1, C2, C3), **gekennzeichnet durch** eine Einrichtung (120) zum Feststellen der Reihenfolge, in der die Druckluftkreise (C1, C2, C3) für die zugehörigen Kreise (C1, C2, C3) während eines Luftdruckaufbaus unter Druck gesetzt werden, und eine Einrichtung (130) zum Ergreifen einer Maßnahme zur Verbesserung der Sicherheit, falls der Feststellbremsendruckluftkreis (C3) vor einem der Betriebsbremsendruckluftkreise (C1, C2) unter Druck gesetzt wird,
wobei die Einrichtung (130) zum Ergreifen einer Maßnahme Mittel (132) zum Informieren des Bedieners des Fahrzeugs (1) umfasst, dass die Betriebsbremsen (46) nicht ausreichend unter Druck gesetzt sind oder falsch unter Druck gesetzt sind, und eine Einrichtung (134) zum Verhindern, dass das Fahrzeug (1) gefahren wird, die Mittel (134b) zum Aktivieren der Feststellbremse (46) umfasst, falls diese nicht aktiviert ist.

5. System nach Anspruch 4, bei dem die Einrichtung (120) zum Feststellen der Reihenfolge, in der die Druckluftkreise (C1, C2, C3) für die zugehörigen Kreise (C1, C2, C3) unter Druck gesetzt werden, eine Einrichtung (122) zum Ermitteln eines Druckaufbaus bis zu einem vorgegebenen Druckwert umfasst.

6. System nach Anspruch 4 oder 5, ferner umfassend eine Einrichtung (140) zum Ermitteln des Verhältnisses zwischen dem Druck in den Druckluftkreisen (C1, C2, C3) und zum Ergreifen einer Maßnahme, falls das Verhältnis zwischen dem Druck in den Druckluftkreisen (C1, C2, C3) bestimmte Kriterien nicht erfüllt, wobei diese Kriterien umfassen, dass der Druck in wenigstens einem der Druckluftkreise (C1, C2) für Betriebsbremsen (42, 44) einen bestimmten Druck erreicht hat und/oder der Druck in allen Kreisen (C1, C2) für Betriebsbremsen (42, 44) einen bestimmten Druck erreicht hat.

7. Fahrzeug (1) umfassend ein System (I) nach einem der Ansprüche 4 bis 6.

8. Computerprogramm (P) zur Verbesserung der Sicherheit einer Fahrzeugbremsanordnung, wobei das Computerprogramm (P) Programmcode enthält, der dann, wenn er auf einer elektronischen Steuereinheit (100) oder einem anderen mit der elektronischen Steuereinheit (100) verbundenen Computer (500) abläuft, die elektronische Steuereinheit dazu veranlasst, die Schritte nach Ansprüche 1 bis 3 auszuführen.

9. Computerprogrammprodukt mit einem digitalen Speichermedium, auf welchem das Computerprogramm nach Anspruch 8 gespeichert ist.

## Revendications

1. Procédé d'amélioration de la sécurité pour un dispositif de freinage (10) de véhicule (1) ayant des circuits d'air (C1, C2, C3) destiné à fournir de l'air comprimé aux freins de service (42, 44) et au frein de stationnement (46), comprenant l'étape de détermination (S1) de la pression d'air comprimé dans les circuits d'air respectifs (C1, C2, C3), **caractérisé par** les étapes de :
- détermination (S2) de l'ordre dans lequel lesdits circuits d'air (C1, C2, C3) sont mis sous pression pour les circuits respectifs (C1, C2, C3) pendant l'augmentation de la pression d'air ; et
- prise d'action (S3) visant à améliorer la sécurité si le circuit d'air de frein de stationnement (C3) est mis sous pression avant l'un quelconque des circuits d'air de frein de service (C1, C2) ;
dans lequel l'étape de prise d'action comprend l'étape d'information de l'opérateur du véhicule du fait que les freins de service (42, 44) ne sont pas suffisamment pressurisés ou sont incorrectement pressurisés, et
empêchement de la conduite du véhicule en activant le frein de stationnement (46) s'il n'est pas activé.

2. Procédé selon la revendication 1, dans lequel l'étape de détermination de l'ordre dans lequel lesdits circuits d'air (C1, C2, C3) sont mis sous pression pour les circuits respectifs (C1, C2, C3) comprend la détermination d'une augmentation de pression jusqu'à une certaine valeur de pression.

3. Procédé selon la revendication 1 ou 2, comprenant en outre la détermination de la relation entre la pression dans lesdits circuits d'air (C1, C2 C3) et la prise d'action si la relation entre la pression dans lesdits circuits d'air (C1, C2 C3) ne remplit pas certains critères, dans lequel lesdits critères comprennent le fait que la pression dans au moins un des circuits d'air (C1, C2) des freins de service (42, 44) a atteint une certaine pression et/ou le fait que la pression dans tous les circuits (C1, C2) des freins de service (42, 44) a atteint une certaine pression.

4. Système (I) d'amélioration de la sécurité d'un dispositif de freinage (10) de véhicule (1) ayant des circuits d'air (C1, C2, C3) destinés à fournir de l'air comprimé aux freins de service (42, 44) et au frein de stationnement (46), comprenant des moyens (110) pour déterminer la pression d'air comprimé dans les circuits d'air respectifs (C1, C2, C3), **caractérisé par un** moyen (120) pour déterminer l'ordre dans lequel lesdits circuits d'air (C1, C2, C3) sont mis sous pression pour les circuits respectifs (C1, C2 C3) pendant l'augmentation de pression d'air ; et un moyen (130) pour prendre des actions visant à améliorer la sécurité si le circuit d'air de frein de stationnement (C3) est mis sous pression avant l'un quelconque des circuits d'air de frein de service (C1, C2) ; dans lequel le moyen (130) de prise d'action comprend un moyen (132) pour informer l'opérateur du véhicule (1) du fait que les freins de service (46) ne sont pas suffisamment pressurisés ou sont incorrectement pressurisés, et
un moyen (134) pour empêcher le véhicule (1) d'être conduit comprenant un moyen (134b) pour activer le frein de stationnement (46) s'il n'est pas activé.

5. Système selon la revendication 4, dans lequel le moyen (120) pour déterminer l'ordre dans lequel lesdits circuits d'air (C1, C2, C3) sont mis sous pression pour les circuits respectifs (C1, C2, C3) comprend un moyen (122) pour déterminer une augmentation de la pression jusqu'à une valeur de pression spécifiée.

6. Système selon la revendication 4 ou 5, comprenant en outre un moyen (140) pour déterminer la relation entre la pression dans lesdits circuits d'air (C1, C2 C3) et la prise d'action si la relation entre la pression dans lesdits circuits d'air (C1, C2 C3) ne remplit pas certains critères, dans lequel lesdits critères comprennent le fait que la pression dans au moins un des circuits d'air (C1, C2) des freins de service (42, 44) a atteint une certaine pression et/ou le fait que la pression dans tous les circuits (C1, C2) des freins de service (42, 44) a atteint une certaine pression.

7. Véhicule à moteur (1) comprenant un système (I) selon l'une quelconque des revendications 4 à 6.

8. Programme informatique (P) d'amélioration de la sécurité d'un dispositif de freinage de véhicule, ledit programme informatique (P) comprenant un code de programme qui, lorsqu'il est exécuté sur une unité de commande électronique (100) ou un autre ordinateur (500) connecté à l'unité de commande électronique (100), amène l'unité de commande électronique à réaliser les étapes selon les revendications 1 à 3.

9. Produit de programme informatique comprenant un support de stockage numérique stockant le programme informatique selon la revendication 8.
